# FASCICULE DE BREVET EUROPEEN

(11) **EP 0 498 715 B1**
(45) Date de publication et mention de la délivrance du brevet: **27.12.1996**
(21) Numéro de dépôt: 92400281.9
(22) Date de dépôt: 04.02.1992
(51) Int. Cl.: H02J 7/10

(54) **Procédé d'optimisation de la charge d'une batterie d'accumulateurs, et dispositif pour la mise en oeuvre de ce procédé**
Verfahren zur Ladungsoptimierung einer Akkumulatorenbatterie und Vorrichtung zu dessen Durchführung
Process for optimizing the charge of an accumulator battery and apparatus for carrying out the process

(30) Priorité: 08.02.1991 FR 9101468
(43) Date de publication de la demande: 12.08.1992
(73) Titulaire: SAFT, F-93230 Romainville (FR)
(72) Inventeur: Busson, Guy, F-37270 Athée sur Cher (FR)
(74) Mandataire: Sciaux, Edmond

(56) Documents cités:
- EP-A- 0 225 106
- CH-B- 648 936
- FR-A- 2 326 052
- US-A- 3 603 862
- US-A- 4 433 277
- US-A- 4 667 143
- US-A- 4 670 703

## Description

L'invention concerne un procédé d'optimisation de la charge d'une batterie d'accumulateurs, et un dispositif pour la mise en oeuvre de ce procédé. Des batteries d'accumulateurs sont utilisées pour alimenter en énergie électrique de nombreux équipements, lorsque le réseau public de distribution d'électricité est défaillant. Par exemple : des automatismes, des machines informatiques, des centraux de télécommunication, etc, sont secourus pendant une durée limitée, au moyen de batteries d'accumulateurs.

La "charge" consiste à stocker de l'énergie électrique dans la batterie sous la forme électrochimique. La durée pendant laquelle une batterie d'accumulateurs remplit sa fonction de secours est limitée notamment par la quantité d'énergie stockée dans cette batterie sous une forme électrochimique, car la "décharge" de la batterie consiste à restituer sous la forme d'énergie électrique l'énergie stockée sous la forme électrochimique. Optimiser la charge d'une batterie consiste donc à stocker le plus possible d'énergie électrique sous la forme électrochimique. Par ailleurs, il est inutile et néfaste de fournir à une batterie de l'énergie électrique qui ne serait pas convertible en énergie électrochimique stockée. Quand une batterie a stocké le maximum d'énergie possible sous la forme électrochimique, il apparaît des phénomènes dits de "surcharge", consistant notamment en une électrolyse et une élévation de température, voir un emballement thermique.

En dehors des périodes de charge, ou de décharge vers un circuit extérieur, une batterie subit une auto-décharge interne qui dissipe lentement l'énergie stockée. Pour maintenir son état de charge, la batterie est soumise à un régime dit de "maintien", compensant l'auto-décharge en fournissant à la batterie un courant ayant une faible intensité prédéterminée.

Le document EP-A-0 225 106 décrit un procédé pour mesurer et afficher la charge d'un accumulateur, consistant à faire le bilan de la quantité d'électricité fournie à l'accumulateur et de la quantité d'électricité restituée par cet accumulateur.

Selon les procédés de charge classiques, le passage du régime de maintien au régime de charge n'a lieu qu'une seule fois après chaque période de décharge et il est décidé en fonction de certains paramètres considérés séparément ou en combinaison : la quantité d'électricité fournie pendant la période de décharge, ou la durée de la période de décharge. Le passage du régime de charge au régime de maintien est lui aussi décidé une seule fois, en fonction de certains paramètres, considérés séparément ou en combinaisons : la quantité de l'électricité fournie à la batterie pendant la période de charge; l'intensité du courant de charge; la force contre-électromotrice de la batterie; la température de la batterie; l'élévation de la température de la batterie par rapport à la température ambiante; la durée de charge.

Par exemple, les documents US-A-4 433 277 et US 4 670 703 décrivent de tels procédés de charge.

Des procédés de charge classiques consistent à passer du régime de charge au régime de maintien lorsqu'une surcharge est effectivement réalisée et peut alors être détectée par la température de la batterie ou par la différence entre la température de la batterie et la température de l'ambiance.

D'autres procédés de charge classiques consistent à faire l'hypothèse que la capacité à la charge, c'est-à-dire le maximum d'énergie stockable sous la forme électrochimique, est toujours égale à la capacité de référence de la batterie, celle-ci étant par définition la quantité d'énergie électrique restituable par la batterie dans le cas où elle a été chargée de manière optimale. La décision de passer du régime de charge au régime de maintien est alors prise lorsque la durée de la charge, à intensité constante, atteint une valeur fixée; ou bien lorsque le bilan de la quantité de l'électricité reçue par la batterie et de la quantité de l'électricité fournie par la batterie à un circuit extérieur, atteint une valeur fixée. Dans certains cas, le maximum d'énergie stockable est bien inférieur à la capacité de référence du fait d'une élévation de température ambiante ou du vieillissement de la batterie. Après que ce maximum ait été atteint la batterie subit une surcharge.

Ces procédés ont donc pour inconvénient de fournir inutilement de l'énergie à la batterie pendant un certain temps, au moins dans certains cas, cette énergie pouvant même être néfaste pour la durée de vie de la batterie.

La demande de brevet CH 648 936 décrit un dispositif d'optimisation de charge qui commande le début ou l'arrêt total de la charge en fonction de l'état de charge (celui-ci étant déterminé à partir d'un état initial de charge), de la quantité d'électricité fournie à un récepteur, et de valeurs caractéristiques de l'accumulateur : une capacité de référence (ou "nominale"), le rendement de la charge, le rendement de la décharge, l'auto-décharge au repos, et la relation entre le rendement de la décharge et la température de l'accumulateur pendant cette décharge.

L'état initial de charge est déterminée en mesurant la quantité d'électricité fournie à l'accumulateur au cours de la première charge, avec une correction en fonction de la température.

Il reste une certaine incertitude sur la capacité de référence de l'accumulateur, qui est sujette à des dispersions de fabrication, du nombre de cycles charge-décharge, et du vieillissement. Tous les procédés de charge connus ont en outre pour inconvénient de ne pas assurer une charge optimale dans certains cas, car la capacité de la batterie à la charge peut varier en fonction de différents paramètres, notamment la température, tandis que la capacité à la décharge reste égale à la capacité de référence, car elle dépend presque uniquement de la quantité d'énergie effectivement stockée sous forme électrochimique, pour des domaines habituels d'utilisation et des conditions de décharge déterminées, dont notamment l'intensité du courant de décharge.

La variation de la capacité à la charge en fonction de la température de la batterie dépend de la technologie de réalisation de la batterie. Généralement, elle diminue lorsque la température augmente. Par conséquent, une batterie chargée selon un procédé classique peut atteindre sa limite de surcharge si les conditions de charge sont défavorables, par exemple si la température ambiante est élevée, alors que des conditions de charge plus favorables peuvent se présenter ultérieurement, en particulier s'il y a diminution de la température ambiante. La capacité effectivement chargée reste celle obtenue lors de la charge dans les conditions défavorables. Elle est donc inférieure à celle que pourrait atteindre la batterie dans de nouvelles conditions plus favorables.

Le but de l'invention est de proposer un procédé optimisant la charge d'une batterie d'accumulateurs, pour stocker sous la forme électrochimique une quantité d'énergie optimale, c'est-à-dire correspondant aux conditions de charge les plus favorables rencontrées par la batterie pendant les phases de maintien ou de charge postérieures à la dernière phase de décharge, même partielle.

Le procédé vise également à éviter des surcharges systématiques en fin de charge, en particulier en adaptant automatiquement la quantité d'électricité aux caractéristiques propres de la batterie à charger (dispersion de capacité, notamment dispersion de fabrication).

L'objet de l'invention est un procédé d'optimisation de la charge d'une batterie d'accumulateurs, comportant un régime de charge pour compenser une décharge vers un circuit extérieur, et un régime de maintien pour compenser l'auto-décharge de la batterie, consistant à :
- comparer, par rapport à une valeur de seuil, le bilan de la quantité d'électricité stockée par la batterie et de la quantité d'électricité fournie par la batterie à un circuit extérieur, en prenant, pour valeur de seuil une valeur calculée de la quantité d'électricité que peut stocker la batterie sans manifester de phénomènes de surchage, cette valeur étant appelée capacité de la batterie à la charge, et étant calculée en fonction :
   -- d'une capacité dite de référence, qui est la capacité à la charge à une température de référence;
   -- de la différence entre la température de la batterie, à l'instant considéré, et la température de référence;
   -- et d'une loi prédéterminée de variation de la capacité à la charge, en fonction de la température de la batterie,
- décider soit de passer du régime de maintien au régime de charge, soit de passer du régime de charge au régime de maintien, en fonction du résultat de la comparaison;
caractérisé en ce que, pour déterminer la capacité de référence de la batterie à une température de référence, il consiste à :
- charger exceptionnellement la batterie jusqu'à une surchargé, celle-ci étant détectée en comparant la différence entre la température de la batterie et la température ambiante, par rapport à une valeur de seuil;
- prendre pour valeur de la capacité de référence le bilan de la quantité d'électricité stockée par la batterie et de la quantité d'électricité fournie par la batterie à un circuit extérieur;
- prendre pour température de référence la température de la batterie en fin de charge.

Le procédé ainsi caractérisé permet ensuite d'éviter toute surcharge de la batterie puisque le régime de charge est arrêté lorsque le bilan des quantités d'électricité est égale à la capacité de la batterie à la charge dans les conditions effectives où se trouve la batterie, c'est-à-dire en tenant compte des variations de cette capacité à la charge.

Un certain temps après l'arrêt du régime de charge, si la température ambiante a diminué, la capacité à la charge a augmenté. Une comparaison du bilan et de la nouvelle valeur de capacité à la charge permet donc de remettre la batterie en régime de charge, pour augmenter la quantité d'énergie effectivement stockée sous forme électrochimique. Il n'y a aucun phénomène de surcharge, puisqu'une nouvelle décision de passage au régime de maintien sera prise dès que le bilan aura atteint la nouvelle valeur de capacité à la charge. Le stockage d'énergie peut donc être réalisé en plusieurs périodes de charge, aussi nombreuses que nécessaire pour obtenir un stockage maximal.

L'invention sera mieux comprise et d'autres caractéristiques apparaîtront à l'aide de la description ci-dessous et des figures l'accompagnant :
- la figure 1 représente le schéma synoptique d'un exemple de réalisation d'un dispositif pour la mise en oeuvre du procédé selon l'invention;
- la figure 2 représente l'organigramme d'un exemple de mise en oeuvre du procédé selon l'invention.

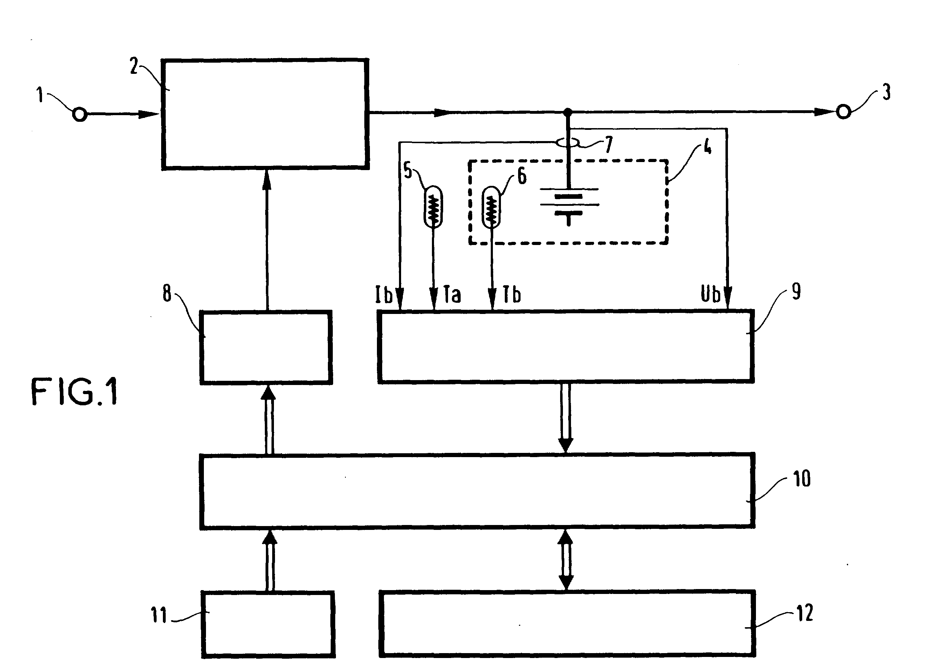

L'exemple de réalisation représenté sur la figure 1 comporte:
- une borne d'entrée 1 qui est reliée à une alimentation classique, par exemple un transformateur alimenté par le réseau public de distribution d'électricité et un dispositif de redressement et de filtrage, non représenté;
- un convertisseur continu-continu, 2;
- une borne de sortie 3 reliée à un circuit utilisateur, non représenté;
- une batterie d'accumulateurs 4, par exemple du type cadmium-nickel étanche;
- un capteur de température ambiante, 5;
- un capteur de température 6, situé à l'intérieur de la batterie 4;
- un capteur d'intensité, 7;
- une interface de sortie, 8;
- une interface d'entrée, 9;
- une unité de traitement numérique, 10;
- une mémoire de programme, 11;
- une mémoire de sauvegarde, 12.

Lorsque le réseau de distribution d'électricité fonctionne normalement, le convertisseur 2 a pour fonction d'alimenter le circuit utilisateur, et de fournir à la batterie 4 : soit un courant de charge pour compenser une décharge ayant été réalisée vers le circuit extérieur, soit un courant de maintien, d'intensité beaucoup plus faible, pour compenser l'auto-décharge de la batterie.

Le convertisseur 2 possède : une entrée reliée à la borne d'entrée 1 pour recevoir une tension continue, lorsque le réseau de distribution d'électricité fonctionne normalement; une entrée de commande reliée à une sortie de l'interface de sortie 8; et une sortie reliée à une première borne de la batterie 4 et à la borne de sortie 3. La seconde borne de la batterie 4 n'est pas représentée et est reliée à un potentiel de référence. La première borne de la batterie est reliée à une entrée de l'interface d'entrée 9 pour lui permettre de mesurer la tension Ub de la batterie. Le capteur d'intensité, 7, est intercalé sur cette première borne et est relié à l'interface d'entrée, 9, pour lui permettre de mesurer l'intensité Ib du courant entrant ou sortant de la batterie 4.

Le capteur de température ambiante, 5, est relié à une entrée de l'interface d'entrée, 9, pour lui permettre de mesurer la température ambiante Ta. Un capteur de température, 6, est placé au contact de la batterie 4 et est reliée à une entrée de l'interface d'entrée, 9, pour lui permettre de mesurer la température Tb de la batterie 4. L'interface d'entrée, 9, est reliée par un bus à l'unité de traitement numérique 10. C'est une interface classique réalisant notamment la fonction de conversion analogique-numérique.

L'unité de traitement numérique 10 est reliée par des bus à : la mémoire de programme, 11, qui est une mémoire morte stockant la suite des instructions mettant en oeuvre le procédé selon l'invention; et à la mémoire de sauvegarde 12 qui est une mémoire vive permettant de stocker des données au cours de la mise en oeuvre du procédé selon l'invention. L'unité de traitement numérique, 10, est reliée par un bus à l'interface de sortie, 8, cette dernière ayant essentiellement pour fonction de commander le convertisseur 2 en lui fournissant soit un signal de mise en charge, soit un signal de mise en maintien. L'interface de sortie, 8, assure notamment l'isolement et l'amplification de puissance nécessaires pour commander le convertisseur 2 par ces signaux. L'unité de traitement numérique 10 fournit ces signaux sous la forme d'un mot binaire qui n'est pas apte à commander directement le convertisseur 2.

Si le réseau public est défaillant, le convertisseur 2 ne peut plus assurer sa fonction. Le signal de commande fourni par l'interface 8 n'a plus d'effet. La batterie 4 se met alors à débiter dans le circuit utilisateur et passe donc spontanément en régime de décharge.

L'unité de traitement numérique, 10, traite les données reçues par l'interface d'entrée, 9, et commande le convertisseur 2, au moyen du signal fourni par la sortie de l'interface 8, conformément au programme stocké dans la mémoire de programme 11. Elle peut être constituée de n'importe quel microprocesseur classique.

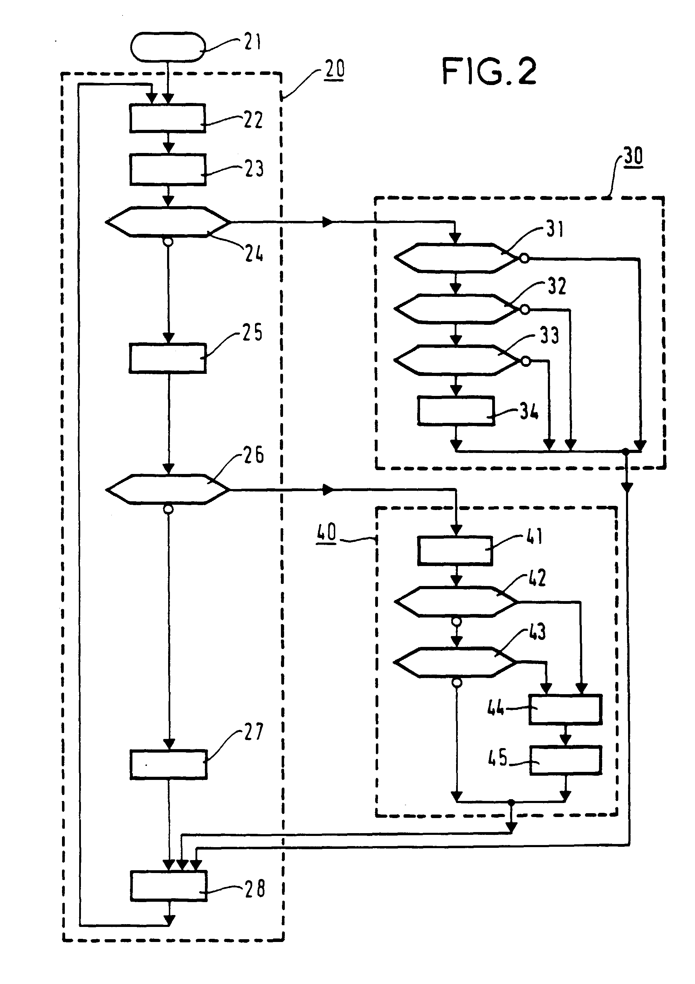

La figure 2 représente l'organigramme du programme mis en oeuvre par l'unité 10 dans cet exemple de réalisation. En pratique, la même unité de traitement numérique 10 remplit des fonctions supplémentaires, notamment des fonctions de surveillance pour assurer la sécurité de la batterie et de l'ensemble du dispositif alimentant le circuit utilisateur. C'est pourquoi l'unité de traitement numérique 10 reçoit la valeur Ub de la tension de la batterie. Cependant, ces fonctions supplémentaires étant classiques, elles ne seront pas décrites ici.

L'organigramme de cet exemple de mise en oeuvre comprend une boucle principale 20 permettant essentiellement de mettre à jour le bilan des quantités d'électricité reçues et fournies par la batterie 4, et permettant de cadencer l'exécution du programme. Une première boucle secondaire 30 a pour fonction essentielle de décider, ou non, un changement de régime, pour passer du régime de maintien au régime de charge. Une seconde boucle secondaire 40 a essentiellement pour fonction de décider, ou non, d'un changement de régime pour passer du régime de charge au régime de maintien.

Avant d'entrer dans la boucle principale 20, le programme commence par une étape d'initialisation 21, réalisée lors de la mise sous tension du dispositif d'optimisation de charge. Cette initialisation 21 consiste à programmer les interfaces 8 et 9, et consiste à donner des valeurs prédéterminées à certains paramètres : le bilan des quantités d'électricité reçues et fournies par la batterie est remis à 0; un paramètre appelé température limite est initialisé à une valeur prédéterminée appelée température maximale admissible, qui est la température que la batterie ne doit dépasser en aucun cas, en début de charge.

La boucle principale 20 commence par une acquisition 22 de l'intensité Ib, de la température ambiante Ta, et de la température de batterie Tb. Ensuite elle consiste en une estimation 23 de la capacité à la charge, en fonction de la capacité de référence à une température de référence, et en fonction de la différence entre la température Tb de la batterie, à l'instant considéré, et la température de référence. Pour une technologie donnée, la capacité de référence d'une batterie n'est pas connue de façon précise, à priori. Elle dépend des dispersions de fabrication et du nombre de cycles de charge-décharge. En pratique, il est donc nécessaire que l'utilisateur d'une batterie donnée mesure sa capacité de référence, pour la connaître avec précision.

Cette mesure est faite notamment au moment de l'installation de la batterie, selon l'un des deux procédés suivants :
- partir d'un état de décharge, et charger la batterie jusqu'à ce qu'une surcharge se manifeste, en mesurant la quantité d'électricité fournie et en multipliant celle-ci par un coefficient de pondération pour tenir compte du rendement de la transformation de l'énergie électrique reçue en énergie électro-chimique stockée;
- partir d'un état de charge optimal, obtenu par une charge prolongée jusqu'à la surcharge, puis décharger complètement la batterie, selon un régime de décharge lent, jusqu'à ce que la tension atteigne une valeur caractéristique de l'état de décharge complète, en mesurant la quantité d'électricité restituée.

Dans les deux cas, la température de la batterie est mesurée en fin de charge, et est mémorisée dans la mémoire 12 pour constituer la température de référence, qui est associée à la valeur de référence de la capacité. La mesure de la capacité de référence et de la température de référence peut être refaite périodiquement par l'utilisateur de la batterie, pour tenir compte du vieillissement de la batterie.

Pour une technologie donnée, la loi de variation relative de la capacité en fonction de la température, est connue avec une bonne précision, sans qu'il soit nécessaire de la remesurer pour chaque batterie. Les valeurs de cette variation relative, au voisinage de plusieurs valeurs de température, sont stockées dans la mémoire de programme 11.

L'estimation 23 consiste donc à additionner algêbriquement à la capacité de référence une variation égale au produit : de la valeur de la variation relative au voisinage de la température de référence, pour une variation de un degré de température; de la capacité de référence; et de la différence entre la température Tb de la batterie et la température de référence.

La boucle principale 20 consiste ensuite à déterminer quel est le régime en cours. Un test 24 teste un octet de la mémoire de sauvegarde, 12, indiquant quel est le dernier régime commandé au convertisseur 2 par le dispositif d'optimisation de charge. Si ce régime en cours n'est pas le régime de maintien, c'est un régime de charge ou un régime de décharge, et la boucle principale consiste en une mise à jour, 25, du bilan des quantités d'électricité.

Le calcul du bilan, 25, prend en compte la quantité d'électricité stockée par la batterie pendant le régime de charge, et la quantité d'électricité fournie par la batterie au circuit utilisateur extérieur, pendant une décharge; mais ne prend pas en compte celle reçue par la batterie et celle perdue par auto-décharge, pendant le régime de maintien.

Le signe de l'intensité Ib mesurée sur la borne de la batterie permet de distinguer le régime de charge et le régime de décharge. La quantité à ajouter au bilan est négative et égale au produit de l'intensité Ib, et de la durée écoulée depuis la précédente mise à jour du bilan, si c'est un régime de décharge. Une horloge interne à l'unité de traitement 10 permet de mesurer la durée entre deux mises à jour successives. La quantité à ajouter au bilan est positive si c'est un régime de charge. Un coefficient de pondération, égal à 80 % environ, tient compte du rendement de la transformation de l'énergie électrique reçue en énergie électrochimique stockée.

La boucle principale 20 consiste ensuite en un test 26, sur l'octet mentionné précédemment, pour déterminer si le régime en cours est un régime de charge. Si ce n'est pas un régime de charge, c'est un régime de décharge et la boucle principale consiste à réinitialiser le paramètre température limite qui peut avoir été modifié par un passage du traitement dans l'une des deux boucles secondaires, 30 ou 40. Cette réinitialisation 27 consiste à donner à ce paramètre la valeur de température maximale admissible, à la place d'une valeur plus basse ayant été éventuellement attribuée au cours d'une période de charge précédente, et qui perd tout intérêt dès lors que la batterie n'est plus en régime de maintien et régime de charge alternés. La boucle principale est conclue par une temporisation 28 ayant pour rôle de rallonger, à une seconde par exemple, la durée de parcours de la boucle principale 20. Puis le programme recommence l'acquisition 22 de Ib, Ta, Tb.

La première boucle secondaire 30 est une bifurcation traitée seulement dans le cas où le régime en cours est le régime de maintien. Elle consiste en trois tests successifs 31, 32, 33. Si la réponse est positive à ces trois tests, le traitement consiste en une commande 34 pour que le convertisseur 2 passe du régime de maintien au régime de charge. Si l'une des réponses à ces 3 tests n'est pas positive, le régime de maintien est conservé. Dans les deux cas, le traitement revient dans la boucle principale 20 au niveau de la temporisation 28.

Le premier test, 31, consiste à comparer le bilan des quantités d'électricité à la capacité à la charge, qui a été estimée en fonction de Tb. Si le bilan est nettement inférieur à la capacité, la réponse est positive. Le deuxième test, 32, consiste à calculer l'élévation Tb-Ta de la température de la batterie par rapport à l'ambiance, et à la comparer par rapport à une valeur fixée, appelée élévation permise en début de charge. Si l'élévation calculée est inférieure à l'élévation permise en début de charge, la réponse est positive. Le but du deuxième test, 32, est de stabiliser le régime de maintien, en créant une hystérésis qui empêche de trop fréquents passages du régime de maintien au régime de charge, avec de trop courtes périodes de maintien.

Le troisième test, 33, consiste à comparer la température Tb de la batterie à la valeur actuelle du paramètre température limite. Si la température Tb est nettement inférieure à la valeur actuelle du paramètre température limite, la réponse est positive. La valeur du paramètre température limite est égale à la valeur prédéterminée appelée température maximale admissible, lorsque le dispositif d'optimisation vient d'être mis sous tension, ou bien lorsqu'une période de décharge a précédé le régime de maintien qui est en cours. Au cours de la description de la seconde boucle secondaire 40, il apparaîtra que le paramètre température limite peut prendre une autre valeur, inférieure à la température maximale admissible, et qui est la température de la batterie mesurée à la fin de la dernière période de charge.

La seconde boucle secondaire 40 est effectuée dans le cas où la boucle principale 20 constate que le régime en cours est un régime de charge. Elle consiste en une mise à jour, 41, d'un paramètre Tbfc appelé température de batterie en fin de charge, la température de la batterie étant généralement croissante à la fin d'une période de charge. Pour améliorer la précision de détermination de ce paramètre, la valeur retenue est prise égale à la moyenne de plusieurs valeurs de température Tb successives, qui correspondent à un petit intervalle de temps, par rapport à la durée d'une charge.

La valeur retenue constituera effectivement la température de fin de charge si l'un des tests qui suivent décide d'arrêter le régime de charge. Cette modification de la valeur du paramètre température limite a pour but d'empêcher, par le test 33 dans la première boucle secondaire 30, le passage d'un régime de maintien à un régime de charge si la température de la batterie n'a pas suffisamment baissé pour augmenter sensiblement la capacité à la charge.

Quand il n'y a pas eu de période de charge depuis la mise sous tension du dispositif d'optimisation, le passage en régime de charge peut avoir lieu si la température de la batterie est simplement inférieure à la température maximale admissible. Au contraire, s'il y a eu au moins une période de charge depuis l'initialisation, un passage du régime de maintien au régime de charge n'est autorisé, par le test 33 dans la première boucle secondaire 30, que si la température Tb de la batterie est nettement inférieure à la température de fin de charge de la dernière période de charge, laquelle est très généralement inférieure à la température maximale admissible. Ainsi la charge optimale d'une batterie peut être obtenue par une succession de périodes de charge, séparées par des périodes de maintien si la température ambiante varie de façon significative.

La seconde boucle secondaire 40 consiste ensuite en deux tests, 42 et 43, tels que si l'une des deux réponses est positive, le traitement consistera en une commande 44 pour que le convertisseur 2 passe du régime de charge au régime de maintien; et en une mémorisation 45 de la valeur mise à jour, Tbfc, comme valeur du paramètre température limite. Le premier test, 42, consiste à comparer le bilan des quantités d'électricité à la capacité à la charge estimée en fonction de la température de batterie Tb. Si le bilan est supérieur à la capacité, la réponse est positive, le dispositif passe en régime de maintien.

Le deuxième test, 43, consiste à calculer l'élévation de température de la batterie par rapport à l'ambiance, Tb-Ta, puis à la comparer par rapport à une valeur fixée appelée élévation permise en fin de charge. Si l'élévation de température de la batterie par rapport à l'ambiance est supérieure à cette valeur fixée, la réponse au test est positive,le dispositif passe en régime de maintien.

Le deuxième test, 43, est redondant car l'estimation de la capacité réelle à la charge et sa comparaison avec le bilan permet d'arrêter la charge avant tout phénomène de surcharge, notamment en évitant un fort échauffement. Ce test 43 a été prévu comme sécurité, au cas où un défaut du dispositif ou un évènement extérieur quelconque provoquerait une élévation de température anormale dans la batterie, qui nécessiterait un arrêt du régime de charge quelle que soit la valeur des autres paramètres.

Dans tous les cas, la seconde boucle secondaire 40 s'achève par un retour à la boucle principale au niveau de la temporisation 28.

Il est à remarquer que grâce à ce dispositif d'optimisation de charge la batterie n'est jamais soumise à une surcharge, sauf exceptionnellement lorsque l'utilisateur mesure la capacité de référence, une fois par an par exemple.

Selon une variante de réalisation, cette mesure de la capacité de référence est automatisée pour éviter une intervention de l'utilisateur. Dans ce cas, l'unité de traitement 10 mesure périodiquement la capacité de référence en commandant une décharge de la batterie dans le circuit extérieur, jusqu'à ce que la tension de la batterie atteigne une valeur caractéristique de la décharge complète. Puis elle commande une charge continue, jusqu'à détecter une différence de température, entre la batterie et l'ambiance, égale à l'élévation permise en fin de charge, pour conclure que la charge est probablement complète. Elle fait le bilan de la quantité d'électricité stockée et de celle fournie par la batterie. Enfin, elle mémorise la température de la batterie en fin de charge, pour constituer la température de référence correspondant à la capacité de référence.

La portée de l'invention n'est pas limitée à l'exemple de mise en oeuvre décrit ci-dessus. Par exemple, il est à la portée de l'homme de l'art de commander le convertisseur 2 de telle sorte qu'il fournisse une intensité asservie à une valeur de consigne fournie par l'unité de traitement 10, au lieu de fournir seulement deux valeurs d'intensité régulées et prédéterminées, correspondant au régime de maintien et au régime de charge. Un tel asservissement continu est bien connu de l'homme de l'art. Le procédé selon l'invention est particulièrement avantageux pour les batteries ayant une capacité, à la charge, très dépendante de la température, mais l'invention est applicable à tout type de batterie.

Il est à noter par ailleurs que ce procédé est tout particulièrement adapté à des systèmes de charge basés sur le contrôle en courant de la charge de la batterie, car il permet de s'affranchir des compensations, en fonction de la température, des tensions de maintien et de charge, inhérentes au contrôle en tension de la charge.

## Revendications

1. Procédé d'optimisation de la charge d'une batterie d'accumulateurs, comportant un régime de charge pour compenser une décharge vers un circuit extérieur, et un régime de maintien pour compenser l'auto-décharge de la batterie, consistant à :
- comparer (42), par rapport à une valeur de seuil, le bilan de la quantité d'électricité stockée par la batterie et de la quantité d'électricité fournie par la batterie à un circuit extérieur, en prenant, pour valeur de seuil une valeur calculée de la quantité d'électricité que peut stocker la batterie sans manifester de phénomènes de surchage, cette valeur étant appelée capacité de la batterie à la charge, et étant calculée (22, 23) en fonction :
-- d'une capacité dite de référence, qui est la capacité à la charge à une température de référence;
-- de la différence entre la température (Tb) de la batterie, à l'instant considéré, et la température de référence;
-- et d'une loi prédéterminée de variation de la capacité à la charge, en fonction de la température (Tb) de la batterie,
- décider soit de passer (30) du régime de maintien au régime de charge, soit de passer (40) du régime de charge au régime de maintien, en fonction du résultat de la comparaison;
caractérisé en ce que, pour déterminer la capacité de référence de la batterie à une température de référence, il consiste à :
- charger exceptionnellement la batterie jusqu'à une surcharge, celle-ci étant détectée en comparant la différence entre la température (Tb) de la batterie et la température ambiante (Ta), par rapport à une valeur de seuil;
- prendre pour valeur de la capacité de référence le bilan de la quantité d'électricité stockée par la batterie et de la quantité d'électricité fournie par la batterie à un circuit extérieur;
- prendre pour température de référence la température de la batterie en fin de charge.

2. Procédé selon la revendication 1, caractérisé en ce qu'il consiste, en outre, périodiquement, à :
- redéterminer (22) la température de la batterie et le bilan;
- refaire (23) correspondre une valeur de capacité à la température;
- recomparer (31, 42) le bilan et la capacité à la charge;
- redécider (34) soit de passer du régime de maintien au régime de charge, soit de passer (45) du régime de charge au régime de maintien, en fonction du résultat de la dernière comparaison.

3. Procédé selon la revendication 1, caractérisé en ce qu'il consiste à ne passer (34) du régime de maintien au régime de charge que si :
- la différence entre la température (Tb) de la batterie et la température (Ta) de l'ambiance est inférieure (32) à une valeur de seuil définissant l'élévation de température permise à la batterie en début de charge;
- et la température de la batterie est inférieure (33) à une valeur de seuil limitant la température permise à la batterie en début de charge;
- et le bilan est inférieur (31) à la capacité à la charge.

4. Procédé selon la revendication 3, caractérisé en ce qu'il consiste, en outre, à :
- déterminer et mémoriser (41) la température (Tbfc) de la batterie à la fin de chaque période de charge;
- prendre (32) pour valeur de seuil définissant la température limite permise à la batterie en début de charge :
-- la température (Tbfc) mémorisée à la fin de la période de charge précédant la période considérée, si la période considérée n'est pas la première période de charge suivant une période de décharge vers un circuit extérieur;
-- une valeur prédéterminée, si la période considérée est la première période de charge suivant une période de décharge vers un circuit extérieur.

5. Procédé selon la revendication 2, caractérisé en ce qu'il consiste en outre à passer (45) du régime de charge au régime de maintien :
- si (43) l'élévation de température (Ta - Tb) de la batterie par rapport à l'ambiance est supérieure à une valeur de seuil définissant l'élévation maximale de température, permise à la batterie en fin de charge;
- ou si (42) le bilan est supérieur à la capacité à la charge.

6. Dispositif d'optimisation de la charge d'une batterie d'accumulateurs (4), pour la mise en oeuvre du procédé selon la revendication 1, comportant :
- des moyens (2) pour fournir à la batterie soit un courant de charge, soit un courant de maintien, respectivement sous la commande soit d'un signal de mise en charge, soit d'un signal de mise en maintien;
- des moyens (7, 9 à 12) pour faire le bilan de la quantité d'électricité reçue par la batterie et de la quantité d'électricité fournie par la batterie à un circuit extérieur, et pour multiplier ce bilan par un coefficient de pondération prédéterminé;
- des moyens (8, 10 à 12) pour comparer le bilan à une valeur de seuil et fournir soit un signal de mise en charge, soit un signal de mise en maintien, en fonction du résultat de la comparaison, ces moyens comportant :
-- des moyens (5, 9 à 12) pour déterminer la température ambiante (Ta);
-- des moyens (6, 9 à 12) pour déterminer la température de la batterie (Tb);
-- des moyens (10 à 12) pour déterminer l'élévation de température (Tb - Ta) de la batterie par rapport à l'ambiance et la comparer à une valeur de seuil définissant l'élévation de température maximale permise à la batterie en début de charge;
-- des moyens (10 à 12) pour comparer la température (Tb) de la batterie à une valeur de seuil définissant la température maximale permise à la batterie en début de charge;
- des moyens (8, 10 à 12) pour fournir un signal de mise en charge si :
* le bilan est inférieur à la capacité à la charge;
* et l'élévation de la température de la batterie (Tb-Ta) est inférieure à l'élévation maximale permise;
* et la température de la batterie (Tb) est inférieure à la température maximale permise,
- des moyens (6, 9 à 12) pour déterminer une valeur de seuil, en estimant la quantité d'électricité que peut stocker la batterie sans manifester de phénomène de surcharge, cette valeur étant appelée capacité de la batterie à la charge, et étant estimée en fonction :
- d'une capacité dite de référence, qui est la capacité à la charge, à une température de référence;
- de la différence entre la température (Tb) de la batterie, à l'instant considéré, et la température de référence;
- et d'une loi prédéterminée de variation de la capacité à la charge, en fonction de la température (Tb) de la batterie;
caractérisé en ce qu'il comporte en outre des moyens pour déterminer la capacité de référence de la batterie à une température de référence, ces moyens comportant :
- des moyens (2, 5, 6, 7 à 12) pour charger exceptionnellement la batterie jusqu'à une surcharge, celle-ci étant détectée en comparant la différence entre la température (Tb) de la batterie et la température ambiante (Ta), par rapport à une valeur de seuil;
- des moyens (7, 9, 10, 11) pour déterminer le bilan de la quantité d'électricité stockée par la batterie et de la quantité d'électricité fournie par la batterie à un circuit extérieur, ce bilan constituant la valeur de ladite capacité de référence;
- et des moyens (6, 9, 10) pour déterminer la température de la batterie à la fin de cette charge, cette température constituant ladite température de référence.

7. Dispositif selon la revendication 6, caractérisé en ce que les moyens pour déterminer une valeur de seuil, en estimant la capacité à la charge, comportent :
- des moyens (6, 9 à 12) pour redéterminer périodiquement la température (Tb) de la batterie (4), et le bilan;
- des moyens (10 à 12) pour faire correspondre une nouvelle valeur de capacité à chaque nouvelle température;
et en ce que les moyens pour faire le bilan et fournir soit un signal de mise en charge, soit un signal de mise en maintien, comportent des moyens (7, 9 à 12) pour : refaire le bilan périodiquement, comparer chaque nouveau bilan à une nouvelle valeur de capacité, et fournir un nouveau signal de mise en charge ou de mise en maintien, en fonction du résultat de la comparaison.

8. Dispositif selon la revendication 7, caractérisé en ce que les moyens pour comparer le bilan à une valeur de seuil, et fournir soit un signal de mise en charge, soit un signal de mise en maintien, comportent, en outre :
- des moyens (6, 9 à 12) pour déterminer et mémoriser la température (Tbfc), de la batterie à la fin de chaque période de charge;
- des moyens (9 à 12) pour déterminer une valeur de seuil définissant la température limite permise à la batterie en début de charge, cette valeur de seuil étant égale à :
-- la température (Tbfc) déterminée à la fin de la période de charge précédent la période de charge en cours, si la période de charge en cours n'est pas la première période de charge suivant une période de décharge vers un circuit extérieur;
-- une valeur prédéterminée, si la période de charge en cours est la première période de charge suivant une période de décharge vers un circuit extérieur.

9. Dispositif selon la revendication 6, caractérisé en ce que les moyens pour comparer le bilan à une valeur de seuil et fournir soit un signal de mise en charge, soit un signal de mise en maintien, comportent :
- des moyens (6, 9 à 12) pour déterminer la température (Tb) de la batterie;
- des moyens (5, 9 à 12) pour déterminer la température ambiante (Ta);
- des moyens (10 à 12) pour déterminer l'élévation (Tb - Ta) de la température de la batterie par rapport à l'ambiance et la comparer à une valeur de seuil définissant l'élévation maximale de la température, permise à la batterie en fin de charge;
- des moyens (10, 8) pour fournir un signal de mise en maintien si :
-- le bilan est supérieur à la capacité à la charge;
-- ou la température de la batterie est supérieure à la température maximale permise.

## Patentansprüche

1. Verfahren zur Optimierung der Ladung einer Akkumulatoren-batterie, das einen Ladebetrieb, um eine Entladung in eine äußere Lastschaltung zu kompensieren, und einen Aufrechterhaltungsbetrieb enthält, um die Selbstentladung der Batterie zu kompensieren, das darin besteht:
- in Bezug auf einen Schwellwert die Bilanz der von der Batterie gespeicherten Elektrizitätsmenge und der von der Batterie an eine äußere Schaltung gelieferten Elektrizitätsmenge zu vergleichen (42), wobei als Schwellwert ein Rechenwert der Elektrizitätsmenge genommen wird, die die Batterie speichern kann, ohne Überladungsphänomene aufzuweisen, wobei dieser Wert "Ladekapazität der Batterie" genannt wird und berechnet wird (22, 23) in Abhängigkeit von:
-- einer sogenannten Bezugskapazität, die die Ladekapazität bei einer Bezugstemperatur ist;
-- dem Unterschied zwischen der Temperatur (Tb) der Batterie zum betrachteten Zeitpunkt und der Bezugstemperatur;
-- und einem vorbestimmten Gesetz der Variation der Ladekapazität in Abhängigkeit von der Temperatur (Tb) der Batterie,
- in Abhängigkeit vom Ergebnis dieses Vergleichs entweder den Übergang (30) vom Aufrechterhaltungsbetrieb zum Ladebetrieb oder den Übergang (40) vom Ladebetrieb zum Übergangsbetrieb zu beschließen,
dadurch gekennzeichnet, daß zur Bestimmung der Bezugskapazität der Batterie bei einer Bezugstemperatur das Verfahren darin besteht:
- ausnahmsweise die Batterie bis zu einem Überladezustand zu laden, der erfaßt wird, indem der Unterschied zwischen der Temperatur (Tb) der Batterie und der Umgebungstemperatur (Ta) in Bezug auf einen Schwellwert verglichen wird,
- als Wert der Bezugskapazität die Bilanz der von der Batterie gespeicherten Elektrizitätsmenge und der Elektrizitätsmenge zu nehmen, die von der Batterie an eine Lastschaltung geliefert wird,
- als Bezugstemperatur die Temperatur der Batterie am Ende des Ladevorgangs zu nehmen.

2. Verfahren nach Anspruch 1, dadurch gekennzeichnet, daß es außerdem periodisch darin besteht:
- die Temperatur der Batterie und die Bilanz neu zu bestimmen (22);
- einen Kapazitätswert wieder an die Temperatur anzugleichen (23);
- die Bilanz und die Ladekapazität wieder zu vergleichen (31, 42);
- den Übergang vom Aufrechterhaltungsbetrieb in den Ladebetrieb (34) oder den Übergang vom Ladebetrieb in den Aufrechterhaltungsbetrieb (45) in Abhängigkeit vom Ergebnis des letzten Vergleichs neu zu entscheiden.

3. Verfahren nach Anspruch 1, dadurch gekennzeichnet, daß nur dann vom Aufrechterhaltungsbetrieb zum Ladebetrieb übergegangen wird (34),
- wenn der Unterschied zwischen der Temperatur (Tb) der Batterie und der Temperatur (Ta) der Umgebung unter einem Schwellwert (32) liegt, der den der Batterie am Anfang der Ladephase erlaubten Temperaturanstieg definiert;
- und wenn die Temperatur der Batterie unter einem Schwellwert (33) der Temperatur liegt, die die Batterie am Anfang der Ladephase haben darf;
- und wenn die Bilanz unter der Ladekapazität (31) liegt.

4. Verfahren nach Anspruch 3, dadurch gekennzeichnet, daß weiter:
- die Temperatur (Tbfc) der Batterie am Ende jeder Ladeperiode bestimmt und gespeichert wird (41);
- folgender Schwellwert der der Batterie am Anfang der Ladephase erlaubten Grenztemperatur genommen wird (32):
-- die Temperatur (Tbfc), die am Ende der der betrachteten Periode vorhergehenden Ladeperiode gespeichert wurde, wenn die betrachtete Periode nicht die erste Ladeperiode nach einer Entladeperiode in eine Lastschaltung ist;
-- einen vorbestimmten Wert, wenn die betrachtete Periode die erste Ladeperiode nach einer Entladeperiode in eine Lastschaltung ist.

5. Verfahren nach Anspruch 2, dadurch gekennzeichnet, daß außerdem vom Ladebetrieb in den Aufrechterhaltungsbetrieb übergegangen wird (45):
- wenn der Temperaturanstieg (Ta-Tb) der Batterie in Bezug auf die Umgebung größer als ein Schwellwert ist (43), der den maximalen der Batterie am Ende der Entladung erlaubten Temperaturanstieg definiert;
- oder wenn die Bilanz größer ist als die Ladekapazität (42).

6. Vorrichtung zur Optimierung der Ladung einer Akkumulatorenbatterie (4) in Anwendung des Verfahrens nach Anspruch 1, die aufweist:
- Mittel (2), um der Batterie entweder einen Ladestrom oder einen Aufrechterhaltungsstrom unter Steuerung entweder durch ein Ladesignal oder durch ein Aufrechterhaltungssignal zu liefern;
- Mittel (7, 9 bis 12), um die Bilanz der von der Batterie empfangenen Elektrizitätsmenge und der von der Batterie an eine Lastschaltung gelieferten Elektrizitätsmenge zu erstellen und um diese Bilanz mit einem vorbestimmten Wichtungskoeffizient zu multiplizieren;
- Mittel (8, 10 bis 12), um die Bilanz mit einem Schwellwert zu vergleichen und um entweder ein Signal zum Übergang in den Ladebetrieb oder ein Signal zum Übergang in den Aufrechterhaltungsbetrieb in Abhängigkeit vom Ergebnis des Vergleichs zu liefern, wobei diese Mittel aufweisen:
-- Mittel (5, 9 bis 12), um die Umgebungstemperatur (Ta) zu bestimmen;
-- Mittel (6, 9 bis 12), um die Temperatur der Batterie (Tb) zu bestimmen;
-- Mittel (10 bis 12), um den Temperaturanstieg (Tb-Ta) der Batterie in Bezug auf die Umgebung zu bestimmen und um ihn mit einem Schwellwert zu vergleichen, der den maximal erlaubten Temperaturanstieg der Batterie bei Beginn der Ladung definiert;
-- Mittel (10, bis 12), um die Temperatur (Tb) der Batterie mit einem Schwellwert zu vergleichen, der die maximal erlaubte Temperatur der Batterie bei Beginn der Ladephase definiert;
- Mittel (8, 10 bis 12), um ein Ladesignal zu liefern, wenn
* die Bilanz niedriger ist als die Ladekapazität,
* und der Temperaturanstieg der Batterie (Tb-Ta) unter dem maximal erlaubten Anstieg liegt,
* und die Temperatur der Batterie unter der maximal erlaubten Temperatur liegt;
- Mittel (6, 9 bis 12), um einen Schwellwert zu bestimmen, indem die Elektrizitätsmenge geschätzt wird, die die Batterie speichern kann, ohne ein Überladungsphänomen zu zeigen, wobei dieser Wert Ladekapazität der Batterie genannt und geschätzt wird in Abhängigkeit von:
* einer sogenannten Bezugskapazität, die die Ladekapazität bei einer Bezugstemperatur ist,
* der Differenz zwischen der Temperatur (Tb) der Batterie zum betrachteten Zeitpunkt und der Bezugstemperatur;
* und einem vorbestimmten Gesetz der Veränderung der Ladekapazität in Abhängigkeit von der Temperatur (Tb) der Batterie;
dadurch gekennzeichnet, daß sie weiter Mittel aufweist, um die Bezugskapazität der Batterie bei einer Bezugstemperatur zu bestimmen, wobei diese Mittel aufweisen:
- Mittel (2, 5, 6, 7 bis 12), um ausnahmsweise die Batterie bis zu einer Überladung zu laden, wobei diese erfaßt wird, indem die Differenz zwischen der Temperatur (Tb) der Batterie und der Umgebungstemperatur (Ta) in Bezug auf einen Schwellwert verglichen wird;
- Mittel (7, 9, 10, 11), um die Bilanz der von der Batterie gespeicherten Elektrizitätsmenge und der von der Batterie an eine Lastschaltung gelieferten Elektrizitätsmenge zu bestimmen, wobei diese Bilanz den Wert der Bezugskapazität bildet;
- und Mittel (6, 9, 10), um die Temperatur der Batterie am Ende dieser Ladephase zu bestimmen, wobei diese Temperatur die Bezugstemperatur bildet.

7. Vorrichtung nach Anspruch 6, dadurch gekennzeichnet, daß die Mittel zur Bestimmung eines Schwellwerts durch Schätzung der Ladekapazität aufweisen:
- Mittel (6, 9 bis 12), um periodisch die Temperatur (Tb) der Batterie (4) und die Bilanz neu zu bestimmen,
- Mittel (10 bis 12), um einen neuen Kapazitätswert jeder neuen Temperatur entsprechen zu lassen,
und daß die Mittel zur Erstellung der Bilanz und zur Lieferung entweder eines Ladesignals oder eines Aufrechterhaltungssignals Mittel (7, 9 bis 12) aufweisen, um die Bilanz periodisch neu zu erstellen, jede neue Bilanz mit einem neuen Kapazitätswert zu vergleichen und ein neues Ladesignal oder Aufrechterhaltungssignal in Abhängigkeit vom Ergebnis des Vergleichs zu liefern.

8. Vorrichtung nach Anspruch 7, dadurch gekennzeichnet, daß die Mittel zum Vergleich der Bilanz mit einem Schwellwert und zur Lieferung entweder eines Ladesignals oder eines Aufrechterhaltungssignals weiter aufweisen:
- Mittel (6, 9 bis 12), um die Temperatur (Tbfc) der Batterie am Ende jeder Ladeperiode zu bestimmen und zu speichern;
- Mittel (9 bis 12), um einen Schwellwert zu bestimmen, der die der Batterie am Anfang der Ladephase erlaubte Grenztemperatur definiert, wobei dieser Schwellwert gleich ist
* der Temperatur (Tbfc), die am Ende der vor der gerade stattfindenden Ladeperiode ablaufenden Ladeperiode bestimmt wurde, wenn die gerade ablaufende Ladeperiode nicht die erste Ladeperiode nach einer Entladeperiode in eine Lastschaltung ist;
* einem vorbestimmten Wert, wenn die gerade ablaufende Ladeperiode die erste Ladeperiode nach einer Entladeperiode in eine Lastschaltung ist.

9. Vorrichtung nach Anspruch 6, dadurch gekennzeichnet, daß die Mittel zum Vergleich der Bilanz mit einem Schwellwert und zur Lieferung entweder eines Ladesignals oder eines Aufrechterhaltungssignals aufweisen:
- Mittel (6, 9 bis 12), um die Temperatur (Tb) der Batterie zu bestimmen;
- Mittel (5, 9 bis 12), um die Umgebungstemperatur (Ta) zu bestimmen;
- Mittel (10 bis 12), um den Anstieg (Tb-Ta) der Temperatur der Batterie in Bezug auf die Umgebung zu bestimmen und mit einem Schwellwert zu vergleichen, der den maximal erlaubten Temperaturanstieg der Batterie zu Beginn der Ladephase definiert;
- Mittel (10, 8), um ein Aufrechterhaltungssignal zu liefern, wenn:
* die Bilanz größer ist als die Ladekapazität;
* oder die Temperatur der Batterie höher ist als die maximal erlaubte Temperatur.

## Claims

1. A method of optimizing the charging of a battery of storage cells, the method including a charging mode for compensating for discharging to an external circuit, and a maintenance mode for compensating for self-discharging of the battery, said method consisting in:
comparing (42) the electricity balance with a threshold value, where said electricity balance is between the quantity of electricity stored by the battery and the quantity of electricity supplied by the battery to an external circuit, in taking as the threshold value a calculated value of the quantity of electricity that the battery can store without manifesting overcharging phenomena, the value being referred to as the "charging capacity of the battery" and being calculated (22, 23) as a function of:
a "reference" capacity which is the charging capacity at a reference temperature;
the difference between the temperature (Tb) of the battery at the moment in question and the reference temperature; and
a predetermined relationship for variation in charging capacity as a function of temperature (Tb) for the battery;
deciding either to switch (30) from maintenance mode to charging mode, or to switch (40) from charging mode to maintenance mode, as a function of the result of said comparison;
said method being characterized in that in order to determine the reference capacity of the battery at a reference temperature, the method consists in:
charging the battery by way of exception until overcharging occurs, which overcharging is detected by comparing a threshold value with the difference between the temperature (Tb) of the battery and the ambient temperature (Ta);
taking the value of the reference capacity to be the electricity balance between the quantity of electricity stored by the battery and the quantity of electricity supplied by the battery to an external circuit; and
taking the reference temperature to be the temperature of the battery at the end of charging.

2. A method according to claim 1, characterized in that it further consists in periodically:
re-determining (22) the electricity balance and the temperature of the battery;
obtaining (23) a value for capacity that corresponds to the new temperature;
comparing (31, 42) the electricity balance with the new charging capacity; and
deciding (34) again either to switch from maintenance mode to charging mode, or to switch (45) from charging mode to maintenance mode as a function of the result of the previous comparison.

3. A method according to claim 1, characterized in that it consists in switching (34) from maintenance mode to charging mode only if:
the difference between the temperature (Tb) of the battery and ambient temperature (Ta) is less (32) than a threshold value defining a permitted positive temperature difference for the battery at the start of charging;
the temperature of the battery is less (33) than a threshold value limiting the temperature that the battery is permitted at the start of charging; and
the electricity balance is less (31) than the charging capacity.

4. A method according to claim 3, characterized in that it further consists in:
determining and storing (41) the temperature (Tbfc) of the battery at the end of each charging period; and
taking (32) as the threshold value defining the limit temperature that the battery is permitted at the start of charging:
the temperature (Tbfc) stored at the end of the charging period preceding the period in question, if the period in question is not the first charging period after a period of discharging to an external circuit; and
a predetermined value, if the period in question is the first charging period after a period of discharging to an external circuit.

5. A method according to claim 2, characterized in that it further consists in switching (45) from charging mode to maintenance mode:
if (43) the temperature difference (Ta - Tb) of the battery above ambient temperature is greater than a threshold value defining the maximum positive temperature difference that the battery is permitted at the end of charging; or
if (42) the electricity balance is greater than the charging capacity.

6. Apparatus for optimizing the charging of a battery of storage cells (4), and for performing the method according to claim 1, the apparatus including:
means (2) for supplying the battery either with a charging current, or with a maintenance current, respectively actuated by a charge signal and by a maintain signal;
means (7, 9 to 12) for establishing the electricity balance between the quantity of electricity received by the battery and the quantity of electricity supplied by the battery to an external circuit, and for multiplying the electricity balance by a predetermined weighting coefficient; and
means (8, 10 to 12) for comparing the electricity balance with a threshold value and for supplying either a charge signal or a maintain signal as a function of the result of the comparison, said means including:
means (5, 9 to 12) for determining the ambient temperature (Ta);
means (6, 9 to 12) for determining the temperature of the battery (Tb);
means (10 to 12) for determining the temperature difference (Tb-Ta) of the battery above ambient temperature, and for comparing the difference with the temperature (Tb) of the battery at a threshold value defining the maximum temperature that the battery is permitted at the start of charging; and
means (8, 10 to 12) for supplying a charge signal if:
* the electricity balance is less than the charging capacity;
* the temperature difference (Tb - Ta) of the battery is less than the maximum permitted positive difference; and
* the temperature of the battery (Tb) is less than the maximum permitted temperature;
means (6, 9 to 12) for determining a threshold value by estimating the quantity of electricity that the battery can store without manifesting any overcharging phenomena, the value being referred to as the "charging capacity of the battery", and being estimated as a function of:
a "reference" capacity which is the charging capacity at a reference temperature;
the difference between the temperature (Tb) of the battery at the moment in question and the reference temperature; and
a predetermined relationship for the variation in charging capacity as a function of temperature (Tb) for the battery;
said apparatus being characterized in that it further includes means for determining the reference capacity of the battery at a reference temperature, said means including:
means (2, 5, 6, 7 to 12) for charging the battery by way of exception until overcharging occurs, which overcharging is detected by comparing a threshold value with the difference between the temperature (Tb) of the battery and the ambient temperature (Ta);
means (7, 9, 10, 11) for determining the electricity balance where said electricity balance is between the quantity of electricity stored by the battery and the quantity of electricity supplied by the battery to an external circuit, said electricity balance constituting the value of said reference capacity; and
means (6, 9, 10) for determining the temperature of the battery at the end of said charging, said temperature constituting said reference temperature.

7. Apparatus according to claim 6, characterized in that the means for determining a threshold value by estimating the charging capacity include:
means (6, 9 to 12) for periodically re-determining the electricity balance and the temperature (Tb) of the battery (4); and
means (10 to 12) for obtaining a new value of capacity that corresponds to each new temperature;
and in that the means for establishing the electricity balance and for supplying either a charge signal or a maintain signal include means (7, 9 to 12) for: re-establishing the electricity balance periodically, comparing each new electricity balance with a new value of capacity, and supplying a new charge signal or a new maintain signal as a function of the result of the comparison.

8. Apparatus according to claim 7, characterized in that the means for comparing the electricity balance with a threshold value, and for supplying either a charge signal or a maintain signal further include:
means (6, 9 to 12) for determining and storing the temperature (Tbfc) of the battery at the end of each charging period; and
means (9 to 12) for determining a threshold value defining the limit temperature that the battery is permitted at the start of charging, the threshold value being equal to:
the temperature (Tbfc) determined at the end of the charging period preceding the charging period in progress, if the charging period in progress is not the first charging period after a period of discharging to an external circuit; or
a predetermined value, if the charging period in progress is the first charging period after a period of discharging to an external circuit.

9. Apparatus according to claim 6, characterized in that the means for comparing the electricity balance with a threshold value and for supplying either a charge signal or a maintain signal include:
means (6, 9 to 12) for determining the temperature (Tb) of the battery;
means (5, 9 to 12) for determining the ambient temperature (Ta);
means (10 to 12) for determining the temperature difference (Tb - Ta) of the battery above ambient temperature, and for comparing the difference with a threshold value defining the maximum positive temperature difference that the battery is permitted at the end of charging; and
means (10, 8) for supplying a maintain signal if:
the electricity balance is greater than the charging capacity; or
the temperature of the battery is greater than the maximum permitted temperature.
